# EUROPÄISCHE PATENTSCHRIFT

(11) **EP 3 016 795 B1**
(45) Veröffentlichungstag und Bekanntmachung des Hinweises auf die Patenterteilung: **27.03.2019**
(21) Anmeldenummer: 14732556.7
(22) Anmeldetag: 24.06.2014
(51) Int. Cl.: B29C 65/56, B29C 65/78, F16B 4/00, F16B 37/04, B29C 65/64

(54) **VORRICHTUNG UND VERFAHREN ZUM SETZEN EINES EINPRESSELEMENTS**
DEVICE AND METHOD FOR SETTING A PRESS-IN ELEMENT
DISPOSITIF ET PROCÉDÉ POUR METTRE EN PLACE UN ÉLÉMENT ENCASTRÉ

(30) Priorität: 05.07.2013 DE 102013213196
(43) Veröffentlichungstag der Anmeldung: 11.05.2016
(73) Patentinhaber: Bayerische Motoren Werke Aktiengesellschaft, 80809 München (DE)
(72) Erfinder: EROGLU, Oguzhan, 88400 Biberach (DE); FISCHER, Fabian, 82284 Grafrath (DE)
(86) Internationale Anmeldenummer: PCT/EP2014/063274
(87) Internationale Veröffentlichungsnummer: WO 2015/000742

(56) Entgegenhaltungen:
- DE-A1- 10 103 388
- US-A- 5 231 747
- US-A- 5 536 344
- US-A1- 2013 051 909

## Beschreibung

Die vorliegende Erfindung betrifft eine Vorrichtung und ein Verfahren zum Setzen eines Einpresselements. Insbesondere betrifft die vorliegende Erfindung eine Vorrichtung und ein Verfahren zum Setzen eines Einpresselements in ein Werkstück aus Kunststoff oder Faserverbundwerkstoff wie etwa CFK, insbesondere im Fahrzeugbau, an einer vorgegebenen Stelle.

In vielen Anwendungen, wie auch und insbesondere im Fahrzeugbau einschließlich Automobilbau, Flugzeugbau, Schiffbau und anderen Fahrzeuganwendungen sowie bei der Herstellung von Alltagsgegenständen ist die Verwendung von Kunststoffen, insbesondere faserverstärkten Kunststoffen, zunehmend verbreitet. Das Herstellen von Verbindungen zu anderen Werkstücken ist bei Formteilen aus Kunststoff jedoch oft schwierig. Im Automobilbau ist es beispielsweise bekannt, Lasteinleitungspunkte an Faserverbundwerkstücken über Klebebolzen oder dergleichen zu verwirklichen. Problematisch ist dabei die exakte Positionierung, der Flächenbedarf für die Klebeverbindung, die Haltbarkeit der Verklebung unter bestimmten Umgebungsbedingungen (z. B. Temperatur, Feuchtigkeit, Lichtexposition, Wechselbeanspruchung, etc.). Aus dem Bootsbau ist es beispielsweise auch bekannt, einen Lasteinleitungspunkt an einem Faserverbundwerkstück durch Verschraubung mit einer hintergreifenden Metallplatte, die ein Verbindungselement trägt, zu verwirklichen. Auch hierbei ist ein entsprechender Flächenbedarf zu beachten, zusätzlich sind Materialpaarungsprobleme wie etwa Korrosion an Verbindungsflächen von Metallen mit Werkstücken aus kohlenstofffaserverstärktem Werkstoff und dergleichen möglich. Aus der Prothetik ist ein direktes Einschrauben von Gewindebolzen aus einem Faserverbundwerkstoff im Knochengewebe (welches als ein natürlicher Faserverbundwerkstoff verstanden werden kann) bekannt. In technischen Einsatzgebieten von Faserverbundwerkstoffen ist dies in der Regel nicht möglich, da je nach Lastfall eine erhebliche Beschädigungs- und/oder Versagensgefahr bestehen kann. Allgemein ist aus der Faserverbundtechnologie auch bekannt, Verbindungselemente direkt in ein Laminat- oder ein Kunststoffwerkstück einzubinden, wie etwa einzugießen, einzubetten oder dergleichen. Derartige Befestigungselemente sind dann bereits in der Nassphase der Herstellung des Werkstücks zu positionieren und sind nachträglich nicht veränderlich.

Aus Metallkonstruktionen ist es auch bekannt, Einpresselemente wie etwa Einpressmuttern, Einpressgewindebolzen, Einpressösen oder dergleichen insbesondere in Schalen- oder Plattenwerkstücken zur Verwirklichung von Lasteinleitungspunkten zu verwenden. Dabei werden in das Werkstück Löcher eingebracht wie etwa durch Bohren oder Stanzen, und danach wird mit einem Setzwerkzeug maschinell oder von Hand das Einpresselement in das Loch eingepresst. Typischerweise erfolgt dabei eine plastische Materialverformung an dem Werkstück und/oder dem Einpresselement, die dadurch eine wenigstens im Bereich einer Auslegungslast unlösbare Verbindung eingehen. Derartige Lösungen sind etwa als Setzniete, Nietmuttern, Einpressmuttern oder dergleichen bekannt. US 5,231,747 A beschreibt eine Vorrichtung zum Bohren und Einsetzen von Nieten.

In Faserverbundwerkstoffen ist dieses Vorgehen schlecht anwendbar, da Verformungen des Werkstoffs zu irreversiblen Materialschäden führen können.

Die vorliegende Erfindung geht von der Überlegung aus, ein Einpresselement in einem Werkstück, insbesondere aus Kunststoff oder Faserverbundwerkstoff wie etwa CFK (mit Kohlenstoff-Faser verstärkter Kunststoff) oder dergleichen, in der Weise zu setzen, dass ein zylindrischer Abschnitt eines Einpresselements in eine Bohrung eines (gegebenenfalls, wenn auch nicht immer notwendigerweise, an der betreffenden Stelle eine vergrößerte Materialstärke aufweisenden) Werkstücks einzupressen, wobei der zylindrische Abschnitt des Einpresselements ein geeignetes Übermaß gegenüber der Bohrung aufweist, sodass eine Halte- bzw. Auszugskraft im Wesentlichen über die Flächenpressung zwischen der Bohrung und dem zylindrischen Abschnitt des Einpresselements hergestellt wird. Eine variable Pressung mit zusätzlichem Formschluss über z. B. Rasthaken ist analog denkbar. Eine Herausforderung ist hierbei, dass das Einpressen mit einer hohen Positioniergenauigkeit stattfinden muss, da teilweise ein bereits geringfügiger seitlicher Versatz in der Größenordnung von beispielsweise 1/100 mm oder eine Winkelungenauigkeit in entsprechender Größe dazu führen könnte, dass das Kunststoff- bzw. Verbundmaterial an einer Stelle eine zu hohe Flächenpressung, die zu einer Beschädigung führen kann, erfährt, sodass insgesamt eine verringerte Presskraft, gegebenenfalls sogar ein Spiel, entsteht, welches die Auszugskraft des Einpresselements aus dem Werkstück erheblich herabsetzen kann. Es sind bisher kein Verfahren und keine maschinelle Umsetzung bekannt, mit welcher ein solcher Pressverbund mit der hinreichenden Prozesssicherheit, um die erforderlichen Positionier- und Winkelgenauigkeiten beim Einpressen zuverlässig sicherzustellen, hergestellt werden kann.

Allgemeiner gesprochen, ist bisher keine (werkstoffreine) faserverbundgerechte Lösung zur Umsetzung einer Verschraubung und/oder Befestigung weiterer Werkstücke an endlosfaserverstärkten Kunststoffwerkstücken verfügbar, da die Umsetzung einer Verschraubung oftmals mit einer Beschädigung des Faserverbunds einhergeht.

Es ist somit eine Aufgabe der vorliegenden Erfindung, eine Vorrichtung und ein Verfahren bereitzustellen, welche die Nachteile des Stands der Technik, wie vorstehend geschildert, wenigstens teilweise vermeidet. Insbesondere besteht eine Aufgabe der vorliegenden Erfindung darin, eine Vorrichtung und ein Verfahren bereitzustellen, welche eine prozesssichere Einbringung von Verbindungspunkten an Faserverbundwerkstücken oder anderen Kunststoffwerkstücken ermöglicht.

Die voranstehend genannte Aufgabe wird gelöst durch eine erfindungsgemäße Vorrichtung mit dem Merkmal des Anspruchs 1 und ein erfindungsgemäßes Verfahren mit den Merkmalen des Anspruchs 16. Dabei gelten Merkmale und Einzelheiten, die im Zusammenhang mit der erfindungsgemäßen Vorrichtung beschrieben sind, auch im Zusammenhang mit dem erfindungsgemäßen Verfahren und jeweils umgekehrt und wechselweise, sodass hinsichtlich der Offenbarung der einzelnen Erfindungsgesichtspunkte stets wechselseitig Bezug genommen wird bzw. werden kann.

Nach einem Gesichtspunkt der vorliegenden Erfindung wird eine Vorrichtung gemäß dem Anspruch 1 vorgeschlagen.

Unter einem Grundkörper ist im Sinne der Erfindung eine strukturelle Einheit zu verstehen, die einen räumlichen Bezug und eine bauliche Anbaustruktur für weitere Einheiten der Vorrichtung bildet. Der Grundkörper kann eigenständig handhabbar oder Teil einer größeren Anlage sein. Unter einem Fixieren ist im Sinne der Erfindung ein Festhalten des Werkstücks derart gemeint, dass das Werkstück wenigstens während der Bearbeitung durch die Vorrichtung gegenüber der Fixiereinheit - und damit gegenüber der Vorrichtung selbst - unverrückbar ist. Insbesondere umfasst das Fixieren ein lösbares Festhalten, etwa, aber nicht nur, durch Klemmen, Greifen, Ansaugen, etc. Der Begriff des Anbringens kann im Sinne dieses Erfindungsgesichtspunkts ein Fügen sein, etwa, aber nicht nur, durch Schrauben, Schweißen oder dergleichen. In weiterem Sinne kann ein Anbringen auch eine feste Lagerung sein bzw. eine, soweit die nachstehend erläuterten Wirkungen der Erfindung dadurch nicht beeinträchtigt werden, bewegliche Lagerung oder Führung umfassen. Beispielsweise umfasst das Anbringen der Bearbeitungseinheit an dem Grundkörper ein Fügen oder festes Lagern der Bearbeitungseinheit an dem Grundkörper, insbesondere wenn das Fixieren des Werkstücks für jeden Setzvorgang separat erfolgt. In einer Abwandlung kann das Anbringen der Bearbeitungseinheit eine Lagerung an dem Grundkörper derart umfassen, dass die Bearbeitungseinheit in Bezug auf das Werkstück in gewissem Umfang beweglich ist, um Bearbeitungsvorgänge an mehreren vorgegebenen Stellen durchführen zu können, ohne die Fixierung des Werkstücks zu lösen. In diesem Fall können die vorgegebenen Stellen durch Verfahren der Bearbeitungseinheit angefahren werden, wobei die Beweglichkeit der Bearbeitungseinheit an den vorgegebenen Stellen durch Rasten, Bremsmittel bzw. Feststellkörper, einen Zahnradeingriff oder andere Mittel festgelegt werden kann.

Die vorgeschlagene Vorrichtung dieses Gesichtspunkts der vorliegenden Erfindung ermöglicht eine wesentliche Vereinfachung des Setzvorgangs, da Bohren und Einpressen durch ein und dieselbe Vorrichtung möglich sind. Darüber hinaus kann ein genaues Positionieren und Einpressen an der vorgegebenen Stelle gewährleistet werden, da das Werkstück an dem Grundkörper fixiert ist. Durch das Integrieren der Bohreinheit und der Einpresseinheit an einer Bearbeitungseinheit kann eine Abweichung beim Einpressen des Einpresselements in die Bohrung minimiert werden und die erforderliche Einpressgüte erreicht werden. Die Bearbeitungseinheit bildet mit anderen Worten eine Halterung bzw. Führung für die Bohr- und die Einpresseinheit (die auch als die Werkzeuge der Vorrichtung bezeichnet werden können), sodass Lagebeziehungen des Werkstücks, des Grundkörpers und der Werkzeuge bis auf Fertigungstoleranzen, Lagerspiele und Elastizitäten vorgegeben sind.

In einer Weiterbildung der vorliegenden Erfindung dieses Gesichtspunkts ist die Bearbeitungseinheit ausgebildet, um wahlweise die Bohreinheit oder die Einpresseinheit in eine vorbestimmte Arbeitsposition entsprechend der vorbestimmten Stelle zu bringen, wobei eine Arbeitsachse der Bohreinheit, wenn sich die Bohreinheit in der Arbeitsposition befindet, und eine Arbeitsachse der Einpresseinheit, wenn sich die Einpresseinheit in der Arbeitsposition befindet, wenigstens im Wesentlichen übereinstimmen. Dabei kann die Arbeitsachse der Bohreinheit auch als Bohrachse bezeichnet werden bzw. kann die Arbeitsachse der Einpresseinheit auch als Pressachse bezeichnet werden. Weiterhin kann die Arbeitsachse auch allgemein als Vorschub- oder Zustellachse des jeweiligen Werkzeugs bezeichnet werden. Es ist derzeit bevorzugt, dass bei Anwendung der Vorrichtung das fixierte Werkstück als ortsfest betrachtet wird, während sich die

Bohreinheit bzw. die Einpresseinheit gegenüber dem Grundkörper und somit dem daran fixierten Werkstück im Raum bewegt. Die Offenbarung umfasst allerdings auch den kinematisch umgekehrten Fall, dass die Bearbeitungseinheit mit der Bohreinheit und der Einpresseinheit ortsfest sind, während das Werkstück im Raum bewegt wird. Da die Arbeitsachsen der Bohreinheit bzw. der Einpresseinheit, wenn sie sich jeweils in der Arbeitsposition befinden, wenigstens im Wesentlichen übereinstimmen, kann mit hoher Präzision gewährleistet werden, dass das Einpresselement achsengleich in die Bohrung eingepresst wird. Seitlicher Versatz oder Verwinkelung ist damit wenigstens im Wesentlichen definitionsgemäß ausgeschlossen, sodass ein exzentrisches oder schiefes Einsetzen bzw. Einpressen des Einpresselements in die Bohrung wenigstens im Wesentlichen vermieden wird, sodass auch damit verbundene einseitige bzw. punktuelle Verletzungen des Werkstoffs und damit verbundenen Lockerungen des Einpresselements und schlussendlich eine Herabsetzung der Auszugskraft wenigstens im Wesentlichen vermieden werden kann. Die Prozesssicherheit des Einbringens des Einpresselements in das Werkstück kann dadurch weiter verbessert werden. Das wenigstens im Wesentlichen Übereinstimmen beinhaltet freilich auslegungs- und fertigungsbedingte Toleranzen, Lagerspiel, etc., die nie völlig ausgeschlossen werden können. Die Arbeitsposition kann, muss aber nicht, mit Rasten, Anschlägen oder dergleichen arretierbar sein.

Eine besonders genaue Positionierung kann erreicht werden, wenn die Bearbeitungseinheit ausgebildet ist, um die Bohreinheit und die Einpresseinheit in einer gebundenen Bewegung zu führen. Mit einer gebundenen Bewegung ist im Sinne der Erfindung gemeint, dass die Bohreinheit und die Einpresseinheit wenigstens im Hinblick auf eine Raumrichtung oder Drehrichtung sich gemeinsam bewegen bzw. gemeinsam geführt sind. Im Gegensatz dazu ist mit einer ungebundenen Bewegung gemeint, dass die Bohreinheit und die Einpresseinheit völlig unabhängig voneinander bewegt werden können oder sich bewegen können. Ein Beispiel für eine ungebundene Bewegung bzw. Beweglichkeit wäre eine Anbringung an voneinander unabhängig bewegbaren Roboterarmen. Bei einer gebundenen Bewegung können sich Toleranzen in geringerem Ausmaß addieren als bei freieren bzw. unabhängigen Bewegungen der Bohreinheit und der Einpresseinheit. Daher kann die Genauigkeit der Positionierung der Bohreinheit und der Einpresseinheit durch eine gebundene Bewegung verbessert werden. Dies gilt umso mehr, je weniger Freiheitsgrade einer Bewegung der Bohreinheit und der Einpresseinheit zugelassen werden, und je mehr der zugelassenen Freiheitsgrade einer Bewegung der Bohreinheit und der Einpresseinheit miteinander gekoppelt bzw. zueinander festgelegt sind. Die Genauigkeit kann in diesem Sinne am meisten verbessert werden, wenn die Bohreinheit und die Einpresseinheit gegenüber dem fixierten Werkstück in nur einem einzigen Freiheitsgrad beweglich sind und sie sich in diesem Freiheitsgrad nur gemeinsam bewegen können.

Vorteilhafterweise ist die Vorrichtung so ausgebildet, dass die Bearbeitungseinheit eine Werkzeugaufnahme zur Aufnahme der Bohreinheit und der Einpresseinheit aufweist, wobei die Werkzeugaufnahme gegenüber dem Grundkörper beweglich gelagert und antreibbar ist, wobei die Bohreinheit und die Einpresseinheit an der Werkzeugaufnahme befestigt sind, und wobei die Arbeitsposition einer vorgegebenen, vorzugsweise fixierbaren, Rastlage oder Endlage der Werkzeugaufnahme entspricht. Mit anderen Worten, in dieser Ausführungsform bewegen sich die Werkzeuge (die Bohreinheit und die Einpresseinheit) zusammen mit der Werkzeugaufnahme, die an dem Grundkörper gelagert ist. Auf diese Weise kann eine gebundene Bewegung der Bohreinheit und der Einpresseinheit verwirklicht werden. Die Rastlage oder Endlage der Werkzeugaufnahme kann beispielsweise, aber nicht nur, durch Anschläge oder Rastbolzen oder Zahnradeingriff oder dergleichen verwirklicht werden. In einer alternativen Ausführungsform können die Werkzeuge an der Bearbeitungseinheit einzeln beweglich geführt bzw. gelagert sein. Dies kann beispielsweise über eine Verschiebemimik bewerkstelligt und umgesetzt werden, welche zumindest einen translatorischen Freiheitsgrad festlegt.

In einer speziellen Ausführungsform ist die Vorrichtung derart ausgebildet, dass die Werkzeugaufnahme um eine Drehachse beweglich und antreibbar gegenüber dem Grundkörper gelagert ist. Drehbewegungen sind in der Technik gut beherrschbar bzw. umsetzbar und weisen eine günstige Kinematik auf. Mittels der Drehbewegung der Werkzeugaufnahme können die Bohreinheit und die Einpresseinheit auf einfache Weise in die Arbeitsposition bzw. aus dieser herausgeschwenkt werden. Wenn die Bohreinheit und die Einpresseinheit an der Werkzeugaufnahme ortsfest befestigt sind (relativ zu der Werkzeugaufnahme gesehen), kann so eine gebundene Bewegung der Bohreinheit und der Einpresseinheit besonders einfach verwirklicht werden. In einer alternativen Ausführungsform ist die Werkzeugaufnahme an dem Grundkörper linear verschiebbar und antreibbar gelagert.

Die Drehachse der Werkzeugaufnahme kann beispielsweise parallel zu einer Bearbeitungsoberfläche des Werkstücks sein. In diesem Fall sind die Bohreinheit und die Einpresseinheit vorteilhaft so angeordnet, dass die Arbeitsachsen radial zu der Drehachse der Werkzeugaufnahme (sternförmige Anordnung) stehen. Somit kann wenigstens ein Werkzeug, d. h. entweder die Bohreinheit oder die Einpresseinheit, so zu dem Werkstück geschwenkt werden, dass die Arbeitsachse senkrecht zu der Bearbeitungsoberfläche steht. Wird die Werkzeugaufnahme um die Drehachse gedreht, schwenkt das eine Werkzeug von dem Werkstück weg und ein anderes Werkzeug zu dem Werkstück hin. Dadurch kann beispielsweise, wenn die Bohreinheit zu dem Werkstück hin geschwenkt ist, was gleichzeitig bedeutet, dass die Einpresseinheit von dem Werkstück weg geschwenkt ist, die Einpresseinheit gut zugänglich sein, wodurch sie leicht mit einem (nächsten) Einpresselement bestückt werden kann. In einer Ausführungsalternative kann die Drehachse auch senkrecht zur Bearbeitungsoberfläche sein, wobei die Arbeitsachsen vorteilhaft parallel zur Drehachse angeordnet sind (Trommelrevolverprinzip). Im Gegensatz zu der radialen (sternförmigen) Anordnung der Arbeitsachsen können bei trommelrevolverartiger Anordnung die Werkzeuge (Bohreinheit, Einpresseinheit) insgesamt näher an der Drehachse angeordnet sein und kann hierdurch das Trägheitsmoment der Bearbeitungseinheit mit der Bohreinheit und der Einpresseinheit insgesamt geringer sein. Dies kann Präzision, Stellgeschwindigkeit und Dauerfestigkeitsverhalten der Vorrichtung verbessern. Als weitere Abwandlung kann eine schräge Anordnung der Drehachse vorgesehen sein, wobei die Arbeitsachsen einen Winkel zu der Drehachse, der dem Schrägstellungswinkel der Drehachse entspricht, aufweisen (konische Revolveranordnung).

In einer bevorzugten Ausführungsform der vorliegenden Erfindung gemäß diesem Gesichtspunkt sind die Bohreinheit und die Einpresseinheit wenigstens in Teilen in Richtung ihrer jeweiligen Arbeitsachsen gegenüber der Bearbeitungseinheit beweglich und antreibbar. Beispielsweise weist die Einpresseinheit ein Führungsteil und ein Pressteil auf, wobei das Pressteil in dem Führungsteil in Richtung der Pressachse (Arbeitsachse) der Einpresseinheit linear verschiebbar und antreibbar in dem Führungsteil gelagert ist. Gleichermaßen kann die Bohreinheit ein Führungsteil und ein Bohrteil aufweisen, wobei das Bohrteil in Richtung der Bohrachse (Arbeitsachse) der Bohreinheit linear verschiebbar und antreibbar sowie drehbar und in Drehrichtung antreibbar gelagert ist. Mit anderen Worten, die Vorschub- bzw. Zustellbewegung zum Bohren oder Einpressen wird wenigstens teilweise durch die Bohreinheit bzw. Einpresseinheit selbst umgesetzt. Es sind dabei geringere Massen zu bewegen, als wenn, was gleichwohl möglich ist, die gesamte Werkzeugaufnahme in Zustellrichtung beweglich und antreibbar ist. Eine Bewegung bzw. Bewegungsmöglichkeit der Werkzeugaufnahme als Ganzes gegenüber dem Werkstück zumindest über eine Teilstrecke des Zustellweges kann aber beispielsweise für einen Werkstückwechsel vorteilhaft sein. Gegebenenfalls kann ein Zustellen bzw. Wegfahren der Werkzeugaufnahme zu bzw. von dem Werkstück zusammen mit einer Fixierung des Werkstücks durch die Fixiereinheit durchgeführt bzw. damit gekoppelt sein.

In einer bevorzugten Ausführungsform der vorliegenden Erfindung nach diesem Gesichtspunkt ist eine Zuführeinheit vorgesehen, die zum automatischen Zuführen von Einpresselementen ausgebildet ist. Dies erleichtert die Handhabung der Vorrichtung, da eine manuelle Bestückung oder eine Abholung der Einpresselemente von einer Lagereinheit nicht erforderlich ist. Wenn zusätzlich die Zuführeinheit an dem Grundkörper angebracht ist, kann die Zuführung der Einpresselemente und gegebenenfalls Übernahme durch die Einpresseinheit präzise ermöglicht werden.

In einer weiteren bevorzugten Ausführungsform der vorliegenden Erfindung gemäß diesem Gesichtspunkt sind mehrere Einpresseinheiten für unterschiedliche Arten von Einpresselementen an der Bearbeitungseinheit vorgesehen. Dies erleichtert die Verwendung unterschiedlicher Einpresselemente. Dabei kann vorzugsweise für jede Art von Einpresselementen eine gesonderte Zuführeinheit vorgesehen sein. Als weitere Option können auch mehrere Bohreinheiten für unterschiedliche Lochdurchmesser vorgesehen sein für den Fall, dass die unterschiedlichen Arten von Einpresselementen Einpressabschnitte unterschiedlichen Durchmessers aufweisen.

In einer Weiterbildung der vorliegenden Erfindung gemäß diesem Gesichtspunkt ist eine Absaugvorrichtung, die zum Absaugen von Bohrresten ausgebildet ist, vorgesehen. Als Bohrreste können beispielsweise, aber nicht nur, Stäube, Späne, Stücke, Faserabschnitte etc. verstanden werden. Gerade bei Kunststoff bzw. Faserverbundwerkstoffen kann je nach verwendetem Werkstoff bzw. Material von Matrix und/oder Fasern bzw. eines Vollkörpers eine mögliche statische Aufladung eine Säuberung von den Bohrresten erschweren. Vorzugsweise kann die Absaugvorrichtung an dem Grundkörper und/oder der Fixiereinheit befestigt oder insgesamt in die Vorrichtung integriert sein. Alternativ kann auch eine externe Absaugung genutzt werden.

In einer Weiterbildung der vorliegenden Erfindung gemäß diesem Gesichtspunkt weist die Fixiereinheit ein Stützelement, welches das Werkstück von einer Rückseite her stützt, und ein Klemmelement, welches das Werkstück von einer Bearbeitungsseite her mit dem Stützelement verklemmt, auf. Durch das Stützelement und das Klemmelement kann die Fixierung des Werkstücks auf wirksame Weise umgesetzt werden, wobei das Stützelement zusätzlich ein Widerlager gegen eine Bohr- bzw. Einpresskraft bildet. Die Offenbarung dieser Erfindung ist jedoch nicht auf ein Einklemmen in vorstehend beschriebener Weise beschränkt, vielmehr kann eine Fixierung des Werkstücks auf vielfältige Weise umgesetzt werden. Beispielsweise können Greifer vorgesehen sein, welche das Werkstück von der Seite her oder in einer Öffnung (einem Durchbruch) des Werkstücks greifen, oder kann eine Fixierung des Werkstücks durch eine Unterdruckkraft, die beispielsweise von Saugnäpfen oder dergleichen, die auf die Werkstückoberfläche aufgesetzt und unter Unterdruck gesetzt werden, verwirklicht werden.

In einer Weiterbildung der vorliegenden Erfindung gemäß diesem Gesichtspunkt ist die Einpresseinheit ausgebildet, um das Einpresselement mit Spiel aufzunehmen. Durch die Aufnahme des Einpresselements mit Spiel kann sich das Einpresselement zusätzlich an der Bohrung ausrichten, wobei eine bevorzugt an dem Einpresselement vorgesehene Abschrägung (Fase) ausgenutzt werden kann.

Erfindungsgemäß ist die Einpresseinheit ausgebildet, um das Einpresselement elastisch derart aufzunehmen, dass das Einpresselement gegen eine Wirkung von äußeren Kräften an der Einpresseinheit gehalten wird. Als äußere Kräfte können beispielsweise Trägheitskräfte beim Bewegen der Einpresseinheit und die Schwerkraft, die bei normalem Betrieb wirksam sind, in Betracht kommen. Mit anderen Worten, es erfolgt eine Aufnahme durch ein elastisches Element, welches das Einpresselement so lange an oder in der Einpresseinheit hält, bis das Einpresselement in das Werkstück eingepresst ist. Das elastische Element kann beispielsweise ein O-Ring sein. Die Haltekraft des elastischen Elements ist dabei vorzugsweise so ausgelegt, dass sich das Einpresselement selbst an dem Lochrand ausrichten kann, wenn es durch die Einpresseinheit in Richtung des Werkstücks zugestellt wird. Dadurch kann ein Versatz gegenüber der Lochachse weitgehend vermieden werden. Um einen Winkelversatz zu vermeiden, kann vorgesehen sein, dass das Einpresselement in Zustellrichtung fest (also wenigstens im Wesentlichen unelastisch) durch die Einpresseinheit gestützt wird.

In einer weiteren bzw. zusätzlichen Weiterbildung der vorliegenden Erfindung gemäß diesem Gesichtspunkt weist die Einpresseinheit ein Formteil auf, welches an einen Formabschnitt des Einpresselements angepasst ist, um das Einpresselement aufzunehmen. Dadurch können Formmerkmale des Einpresselements wirksam ausgenutzt werden, um es durch die Einpresseinheit aufzunehmen.

In einer bevorzugten Ausführungsform der vorliegenden Erfindung ist die Einpresseinheit ausgebildet, um das Einpresselement von der Zuführeinheit aufzunehmen, während sich die Bohreinheit in ihrer Arbeitsposition befindet. Dies kann den Bearbeitungstakt beschleunigen und ist in einer Ausführung der Vorrichtung, in welcher die Einpresseinheit von der Bearbeitungsstelle wegschwenkt, besonders einfach zu bewerkstelligen. Alternativ kann eine Zuführung der Einpresselemente auch direkt an die Bearbeitungsstelle erfolgen.

In einer Weiterbildung der vorliegenden Erfindung gemäß diesem Gesichtspunkt ist der Grundkörper zur Befestigung einer Bearbeitungsmaschine oder zur manuellen Handhabung ausgebildet. Eine Bearbeitungsmaschine kann beispielsweise, aber nicht nur, einen Roboterarm oder eine Portalführung oder dergleichen aufweisen. Wenn der Grundkörper zur Befestigung an einem solchen Element der Bearbeitungsmaschine ausgebildet ist, kann die Vorrichtung durch die Bearbeitungsmaschine automatisch verfahren werden und können die Bearbeitungsvorgänge besonders gut automatisiert werden. Ferner kann die Bearbeitungsstelle besonders genau angefahren werden. Die Ausbildung zur manuellen Handhabung kann beispielsweise, aber nicht nur, durch Handgriffe, gegebenenfalls unterstützt durch eine Lagerung an einem gewichtsausgleichenden Schwenkarm, umgesetzt sein, wobei an den Handgriffen Auslöseelemente für die funktionalen Bestandteile der Vorrichtung vorgesehen sein können. Bei manueller Handhabung ist ein variabler Einsatz der Vorrichtung auch im Werkstatt- und Laborbetrieb besonders einfach.

In einer bevorzugten Weiterbildung der vorliegenden Erfindung gemäß diesem Gesichtspunkt ist eine Recheneinheit vorgesehen, welche mit der Vorrichtung verbunden oder in diese integriert ist und welche ausgelegt und eingerichtet ist, die Bohreinheit so anzusteuern, dass bei Einbringen der Bohrung in das Werkstück wenigstens ein Parameter aus der Gruppe, die eine Zustellgeschwindigkeit, eine Drehzahl und eine Vorschubkraft der Bohreinheit enthält, an ein vorgegebenes Bohrschema angepasst ist. Mit anderen Worten, es kann eine Geschwindigkeits-, Drehzahl- bzw. Kraftsteuerung oder -regelung durchgeführt werden. Besonders bevorzugt kann das Bohrschema vorsehen, dass eine Zustellgeschwindigkeit und/oder Vorschubkraft zu Beginn der Bohrung sowie kurz vor Durchstoßen einer rückseitigen Werkstückoberfläche reduziert wird. Dies kann ein Ausbrechen oder (insbesondere bei Werkstücken aus kohlenstofffaserverstärkten Werkstoffen) Delaminieren letzter Laminatschichten, was bei zu raschem Durchbohren auftreten kann, reduzieren. Optional kann auch der Einpressvorgang durch die Einpresseinheit hinsichtlich Vorschub, Einpressbewegungsablauf (evtl. auch rotatorisch unterstützt) und/oder Presskraft durch die Recheneinheit regelbar sein. Für die Rückführung der Parameter könnte/-n ein oder mehrere geeignete/r Messfühler vorgesehen sein, welche/-r der Recheneinheit Signale übermittelt/-n, die für Kräfte, Wege, Momente oder Drehzahlen stehen.

Gemäß einem weiteren Gesichtspunkt der vorliegenden Erfindung wird ein Verfahren zum Setzen von Einpresselementen in ein Werkstück, insbesondere aus Kunststoff oder Faserverbundwerkstoff, wie etwa ein CFK, gemäß dem Anspruch 16 vorgeschlagen.

In einer Weiterbildung des erfindungsgemäßen Verfahrens nach diesem Gesichtspunkt wird vor Durchführung der Verfahrensschritte a) bis d) eine Vorbehandlung der Bearbeitungsoberfläche wenigstens im Bereich der vorbestimmten Stelle durchgeführt. Eine Vorbehandlung kann jede Art einer Vorbehandlung umfassen, welche zur Optimierung des Verfahrens geeignet ist. Insbesondere kann beispielsweise eine Aufrauhung der Bearbeitungsoberfläche den "Anschnitt" eines bei Durchführung des Verfahrens verwendeten Bohrers verbessern. Eine solche Aufrauhung kann beispielsweise, aber nicht nur, durch Sandstrahlverfahren oder Bestrahlen mit anderem Strahlgut wie etwa Korund durchgeführt werden. Weitere Vorbehandlungsmöglichkeit ist das Applizieren von zusätzlichen Schichten (Folien, Lacke etc.) auf die Oberfläche.

Das Verfahren und die Vorrichtung gemäß der vorliegenden Erfindung können besonders angepasst sein für die Verwendung eines Einpresselements aus Metall, Kunststoff, Keramik oder Faserverbundwerkstoff insbesondere mit Kohlenstoffendlosfaserverstärktem Verbundmaterial, zur Herstellung eines Lasteinleitungspunkts in ein Werkstück, wobei das Werkstück vorzugsweise ein Kunststoffwerkstück bzw. ein faser-, insbesondere langfaserverstärktes Verbundwerkstück sein kann, wobei besonders bevorzugt ein Werkstück aus CFK die Vorteile der vorliegenden Erfindung zur Geltung bringen kann. Das Einpresselement kann vorzugsweise einen zylindrischen Abschnitt zum Einpressen in die vorstehend beschriebene Bohrung aufweisen. Der zylindrische Abschnitt kann eine Profilierung aufweisen, die ausgelegt ist, um die Auszugslast des Einpresselements aus dem Werkstück gegenüber einer glatten Außenkontur zu erhöhen. Das Einpresselement kann eine Bohrung oder einen axial vorstehenden Bolzen aufweisen, wobei vorzugsweise die Bohrung mit einem Innengewinde bzw. der Bolzen mit einem Außengewinde versehen ist. Durch diese Ausbildung des Einpresselements können besonders vorteilhaft Lasteinleitungs- bzw. Befestigungspunkte an einem Werkstück verwirklicht werden. Alternativ kann das Einpresselement auch eine glatte Oberfläche aufweisen, die beispielsweise als Flächen für das Setzen eines Schweißpunktes genutzt werden kann.

Weitere Merkmale, Aufgaben und Wirkungen der Erfindung ergeben sich aus der Beschreibung und den beigefügten Zeichnungen.

In den Zeichnungen zeigt bzw. zeigen:
- Fig. 1A: eine schematische Darstellung eines Werkstücks mit einer Bohrung zur Veranschaulichung eines Verfahrensschritts in einem Verfahren als einem Ausführungsbeispiel der vorliegenden Erfindung,
- Fig. 1B: eine schematische Darstellung eines Werkstücks mit einer Bohrung und einem Einpresselement zur Veranschaulichung eines weiteren Verfahrensschritts in dem Verfahren,
- Fig. 2A: eine schematische Darstellung eines Einpresselements,
- Fign. 2B - 2E: schematische Darstellungen weiterer, abgewandelter Einpresselemente,
- Fig. 3: eine schematische Darstellung einer Setzvorrichtung als ein weiteres Ausführungsbeispiel der vorliegenden Erfindung, und
- Fig. 4: eine schematische Darstellung einer Einzelheit in einer Schnittansicht, die in Fig. 3 durch eine Schnittlinie IV-IV angegeben ist.

Nachstehend werden Ausführungsbeispiele der Erfindung anhand der beigefügten Zeichnungen beschrieben. Dabei sind gleiche Bauelemente in mehreren Figuren jeweils mit den gleichen Bezugszeichen versehen. Bauelemente und Merkmale, Zwecke und Wirkungen, die in Bezug auf ein Ausführungsbeispiel beschrieben werden, sind, soweit nicht ausdrücklich oder ersichtlich ausgeschlossen, als in jedem anderen Ausführungsbeispiel anwendbar anzunehmen und sollen auch in Bezug auf das jeweils andere Ausführungsbeispiel als offenbart gelten, auch wenn sie dort nicht ausdrücklich gezeigt und/oder beschrieben werden. Es versteht sich ferner, dass die Zeichnungen als schematisch zu verstehen sind und ihnen keine Einschränkungen im Hinblick auf konkrete Abmessungen oder Größenverhältnisse entnommen werden sollen, es sei denn, dies wäre ausdrücklich so beschrieben.

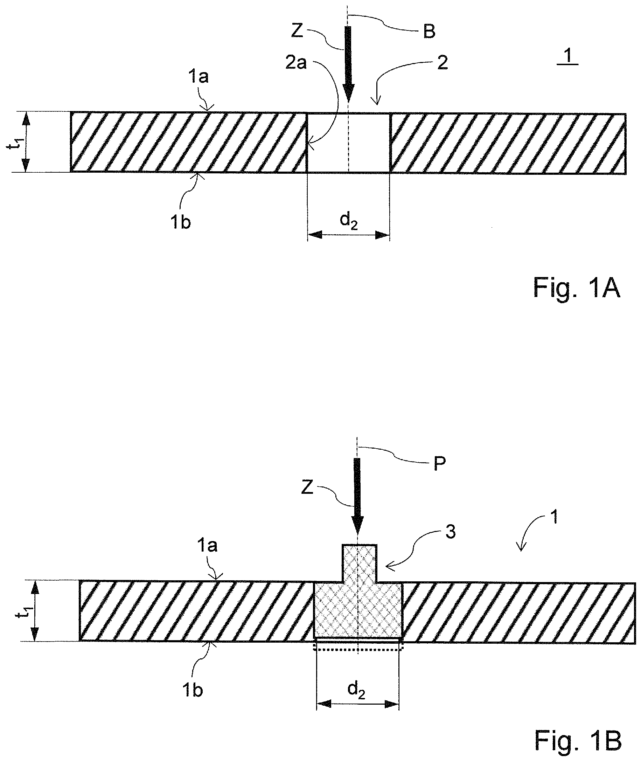

Zunächst wird nachstehend anhand der Fign. 1A und 1B ein Verfahren zum Setzen eines Einpresselements in ein Werkstück als ein Ausführungsbeispiel der vorliegenden Erfindung beschrieben. Fig. 1A zeigt ein Werkstück 1, in welchem durch einen ersten Verfahrensschritt eine Bohrung 2 eingebracht wurde. Dabei veranschaulicht eine strichpunktierte Linie "B" eine Bohrachse und ein Pfeil "Z" veranschaulicht eine Zustellrichtung eines Bohrwerkzeugs zum Einbringen der Bohrung 2 in das Werkstück 1. Das Werkstück 1, welches ein flächenhaftes Werkstück (Schalen- oder Plattenstruktur) mit einer Stärke t₁ ist, ist aus einem Faserverbund-Kunststoff wie etwa CFK hergestellt. Es sei jedoch angemerkt, dass das erfindungsgemäße Verfahren gleichermaßen auf andere Kunststoffwerkstücke bzw. faserverstärkte Werkstücke, wie etwa Faserverbundwerkstoffe mit thermoplastischer oder duroplastischer oder Reaktionsharzmatrix oder monolithische Werkstücke aus Kunststoff wie etwa Duroplasten, wie auch für Werkstücke aus anderen Materialien wie Metallen, Holz oder anderen anwendbar ist.

Die Bohrung 2 wird durch einen geeigneten Bohrer mit Hilfe eines Bohrwerkzeugs von einer Bearbeitungsoberfläche 1a des Werkstücks 1 aus mit einem Bohrungsdurchmesser d₂ eingebracht, sodass sich eine wenigstens im Wesentlichen zylindrische Innenoberfläche bzw. Innenwand 2a der Bohrung 2 ergibt.

Das Bohren von Kunststoffen, insbesondere Faserverbundwerkstoffen und insbesondere von solchen Werkstoffen, die eine erhöhte Sprödigkeit aufweisen, erfordert gegenüber dem Bohren in metallischen Werkstoffen das Einhalten besonderer Bohrparameter und eine besondere Sorgfalt beim Durchstoßen des Bohrers auf der Werkstückrückseite. Beispielsweise sind Kunststoffe in besonderer Weise empfindlich gegen hohe Temperaturen, die beim Bohren mit hohen Drehzahlen (genauer gesagt, mit einer hohen Umfangsgeschwindigkeit am Außenrand bzw. der Außenfläche eines Bohrers) aufgrund von Reibungswärme auftreten können. Zu den Erscheinungen, die bei einer zu hohen Temperatur auftreten können, zählen ein Anschmelzen (insbesondere bei Thermoplasten), ein Verkohlen oder Verglasen (insbesondere bei Duroplasten) wie auch damit verbundene thermische Spannungen und Volumenveränderungen im Bereich der Innenwand 2a der Bohrung 2. Bei Auftreten solcher Erscheinungen ist die Einhaltung von Toleranzen erschwert, wenn nicht unmöglich, abgesehen von einer Veränderung der Werkstoffeigenschaften. Es ist daher wichtig, den Bohrvorgang mit einem geeigneten Werkzeug und der Abstimmung zwischen Drehzahl und Zustellgeschwindigkeit durchzuführen, um die entstehende Reibungswärme zu kontrollieren. Zu den Erscheinungen, die beim Durchstoßen eines Werkstücks auf dessen Rückseite 1b zu beachten sind, gehören ein Ausfransen, ein Ausbrechen, das bis in die Oberfläche einer Werkstückrückseite jenseits des Lochdurchmessers reichen kann (insbesondere bei spröden Werkstoffen wie etwa Duroplasten oder Epoxidharzen) sowie eine Delamination letzter Laminatschichten (bei Faserverbundwerkstoffen). Aus diesem Grund ist auch eine zeitlich variable Steuerung der Vorschubkraft zur Minimierung der vorgenannten Erscheinungen wichtig. Insbesondere ein Ausbrechen und Ausfransen des Bohrungsrandes auf der Werkstückrückseite 1b kann auch durch eine geeignete Form des zum Einbringen der Bohrung verwendeten Bohrers kontrolliert werden. Beispielsweise kann ein Bohrer, der eine Zentrierspitze und eine dem Bohrungsdurchmesser d₂ entsprechende Umfangsschneidkante aufweist, zu einem saubereren Bohrungsrand auf der Werkstückrückseite 1b beitragen. Auch kann es vorteilhaft sein, bei Erreichen der Werkstückrückseite 1b die Zustellgeschwindigkeit (Zustellrichtung Z) zu verringern, um die vorstehend beschriebenen nachteiligen Erscheinungen zu verringern. Das Erreichen der Werkstückrückseite 1b kann beispielsweise durch einen Rückgang der Vorschubkraft bei konstanter Geschwindigkeit oder einem Anstieg der Zustellgeschwindigkeit bei konstanter Vorschubkraft sensorisch oder (bei manuellem Zustellen) durch "Fingerspitzengefühl" erfasst werden.

In Fig. 1B ist das Werkstück 1 von Fig. 1A mit einem in die Bohrung (2 in Fig. 1A, in Fig. 1B nicht näher bezeichnet) eingesetzten Einpresselement 3 gezeigt. Mit anderen Worten, Fig. 1B zeigt das Werkstück 1 nach einem Verfahrensschritt eines Einpressens des Einpresselements 3 in die Bohrung. Dabei entspricht eine gestrichelte Linie "P" einer Pressachse bzw. Einpressachse, wobei ein Pfeil "Z" wieder die Zustellrichtung eines Einpresswerkzeugs, das zum Einpressen des Einpresselements 3 in die Bohrung 2 des Werkstücks 1 verwendet wird, symbolisiert.

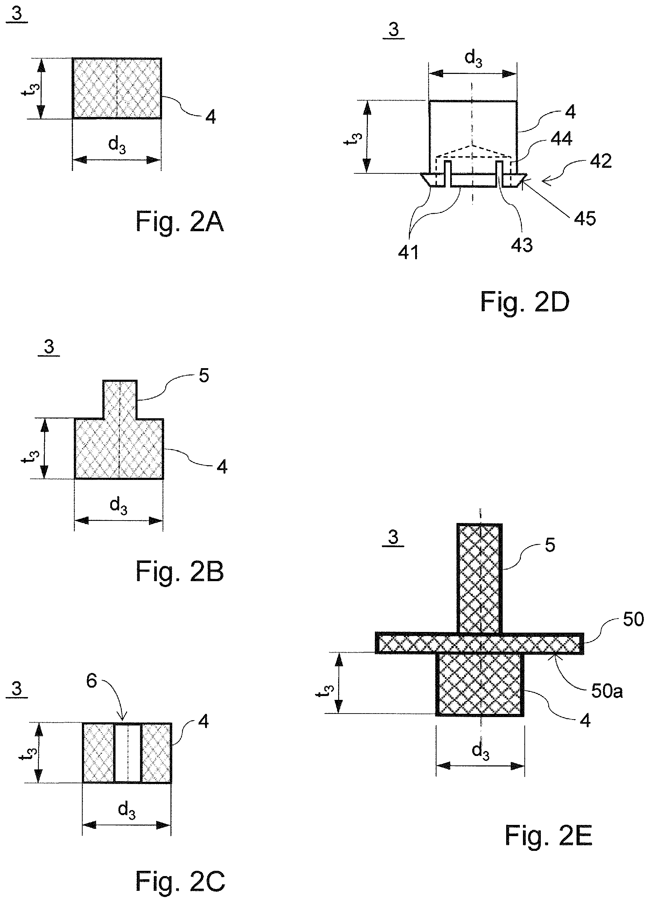

Verschiedene Ausführungsbeispiele des Einpresselements 3 werden nun anhand der Darstellungen in Fign. 2A-2E näher beschrieben.

Fig. 2A zeigt ein Einpresselement 3 mit einem zylindrischen Hauptkörper 4. Genauer gesagt, wird das Einpresselement 3 von Fig. 2A im Wesentlichen durch den zylindrischen Hauptkörper 4 gebildet. Das Einpresselement 3 weist einen Außendurchmesser d₃ sowie eine Stärke (auch als Länge zu bezeichnen) t₃ auf. Das Einpresselement 3 von Fig. 2A weist gemäß Darstellung zwei ebene Stirnseiten (nicht näher bezeichnet) auf. In das Werkstück 1 (Fig. 1B) eingesetzt, kann die ebene Stirnfläche des Einpresselements 3 bzw. des Hauptkörpers 4 beispielsweise als Fläche für das Setzen eines Schweißpunktes verwendet werden.

Fig. 2B zeigt ein Einpresselement 3 in einer Abwandlung des Einpresselements 3 von Fig. 2A. Bei dem Einpresselement 3 von Fig. 2B ist neben dem Hauptkörper 4 ein Zapfen 5 vorgesehen, der von einer Stirnseite des Hauptkörpers 4 koaxial abragt. Der Zapfen 5 kann beispielsweise ein Außengewinde (nicht näher dargestellt) aufweisen, um beispielsweise einen Befestigungspunkt einer Lasche mittels einer Mutter zu bilden, wenn das Einpresselement 3 in die Bohrung 2 des Werkstücks 1 eingepresst ist.

Fig. 2C zeigt ein Einpresselement 3 in einer weiteren Abwandlung des Einpresselements 3 von Fig. 2A. Das Einpresselement 3 von Fig. 2C weist eine koaxial in den Hauptkörper 4 eingebrachte Durchgangsbohrung 6 auf. Die Durchgangsbohrung 6 kann beispielsweise ein Innengewinde (nicht näher dargestellt) aufweisen, um als Anschraubpunkt zu dienen, wenn das Einpresselement 3 von Fig. 2C in die Bohrung 2 des Werkstücks 1 eingepresst ist. In einer weiteren Abwandlung des Einpresselements 3 von Fig. 2C ist anstelle der Durchgangsbohrung 6 eine Sackbohrung vorgesehen.

Fig. 2D zeigt ein Einpresselement 3 in einer Abwandlung des Einpresselements 3 von Fig. 2A. Das Einpresselement 3 von Fig. 2D weist an seinem Hauptkörper 4 mehrere Rasthaken 41 auf. Die Rasthaken 41 werden durch einen umlaufenden, angefasten Kranz 42, der an einem stirnseitigen Ende des Hauptkörpers 4 ausgebildet und durch mehrere Einschnitte 43 unterbrochen ist, gebildet. Der Hauptkörper 4 weist an dem entsprechenden Ende eine Bohrung 44 auf, die wenigstens bis zur Tiefe der Einschnitte 42 reicht (gestrichelt dargestellt). So weisen die Rasthaken 41 eine Wandstärke auf, die es ermöglicht, dass die Rasthaken 41 beim Einpressen des Einpresselements 3 radial elastisch nach innen zurückweichen und, wenn sie auf der Rückseite des Werkstücks 1 die Bohrung 2 verlassen, elastisch zurückschnellen und die Rückseite 1b des Werkstücks 1 hintergreifen. Die Rasthaken 41 bilden auf diese Weise eine weitere Auszugssicherung für das Einpresselement aus. Zusätzlich ermöglicht die Fase 44 der Rasthaken 41 zu Beginn des Einpressens eine Zentrierung des Einpresselements 3 an der Bohrung 2.

Fig. 2E zeigt ein Einpresselement 3 in einer Abwandlung des Einpresselements 3 von Fig. 2B. Das Einpresselement 3 von Fig. 2E weist zwischen dem Hauptkörper 4 und dem Zapfen 5 einen Teller 50 auf, dessen Außendurchmesser größer als der Außendurchmesser d₃ des Hauptkörpers 4 und größer als der Durchmesser des Zapfens 5 ist. So weist der Teller 50 eine Anschlagfläche 50a auf, die einen Anschlag mit der Bearbeitungsfläche 1a bildet und somit die Einpresstiefe des Einpresselements 3 wohldefiniert begrenzt.

Ohne Beschränkung der Allgemeinheit ist das in Fign. 2A-2E dargestellte Einpresselement 3 aus einem mit Endlos-Kohlenstofffasern verstärkten thermoplastischen Werkstoff hergestellt. Wird ein Einpresselement aus CFK in ein Werkstück, das ebenfalls aus CFK hergestellt ist, eingepresst, ergeben sich günstige Wirkungen beispielsweise, aber nicht nur, hinsichtlich eines thermischen Ausdehnungsverhaltens und eines Korrosionsverhaltens. Anders als bei Einpresselementen, die aus bestimmten metallischen Werkstoffen hergestellt sind, kann es nämlich zwischen CFK und CFK nicht zu einer Korrosion kommen. Dennoch kann das Einpresselement 3 auch aus anderen Werkstoffen, auch aus metallischen Werkstoffen, und auch aus anderen Kunststoffen, gegebenenfalls faserverstärkt, hergestellt sein.

Zurück zu Fig. 1B kann ersehen werden, dass eine Stirnfläche des Hauptkörpers 4 des Einpresselements 3 (in Fig. 1B ist beispielhaft das Einpresselement 3 von Fig. 2B gezeigt) auf der Seite der Bearbeitungsoberfläche 1a des Werkstücks 1 mit der Bearbeitungsoberfläche 1a fluchtet. Auf der Rückseite 1b des Werkstücks 1 dringt das Einpresselement 3 nicht ganz bis zu der Rückseite 1b vor, sondern weicht hinter dieser zurück. Da, wie in Fig. 1B ebenfalls ersichtlich, das Einpresselement 3 ein geringfügiges Übermaß gegenüber der Bohrung 2 aufweist, ergibt sich zwischen der Innenoberfläche 2a der Bohrung 2 (siehe Fig. 1A) und der Außenoberfläche des Hauptkörpers 4 des Einpresselements 3 eine Flächenpressung, welche das Einpresselement 3 fest in der Bohrung 2 hält. Diese Flächenpressung bewirkt beim Einpressen des Einpresselements 3 an der Innenoberfläche 2a (Fig. 1A) der Bohrung 2 eine Kraft senkrecht zu einer Schichtebene des aus CFK hergestellten Werkstücks 1. Wie in Fig. 1B durch eine gestrichelte Kontur angedeutet, kann die Stärke t₃ des Einpresselements 3 variieren und gegebenenfalls auch über die Rückseite 1b überstehen oder mit dieser fluchten.

Beim Einpressen des Einpresselements 3 in das Werkstück 1, das aus CFK hergestellt ist, ist eine Präzision der positionsgenauen Einpressung des Einpresselements 3 in die Bohrung 2 besonders wichtig, da exzentrische oder winklige Versätze des Einpresselements 3 gegenüber der Bohrung 2 schon bei geringstem Versatzmaß zu einseitigen oder punktuellen Beschädigungen der Innenoberfläche 2a der Bohrung 2 (und/oder einer Außenoberfläche des Hauptkörpers 4 des Einpresselements 3) führen können und dadurch die Wirksamkeit des Pressverbundes zwischen der Innenoberfläche 2a der Bohrung 2 und der Außenoberfläche des zylindrischen Hauptkörpers 4 des Einpresselements 3 beträchtlich gemindert sein kann. Aus diesem Grunde wird zur Durchführung der in Fig. 1A und Fig. 1B dargestellten Verfahrensschritte des Einbringens einer Bohrung 2 und Einpressens eines Einpresselements 3 in die Bohrung 2 erfindungsgemäß eine Vorrichtung verwendet, welche beide Funktionen des Bohrens und Einpressens in sich vereinigt, wobei die Vorrichtung auch eine Fixierfunktionalität aufweist, mit Hilfe derer das Werkstück 1 vor Beginn des Bohrens gegenüber der Vorrichtung fixiert werden kann.

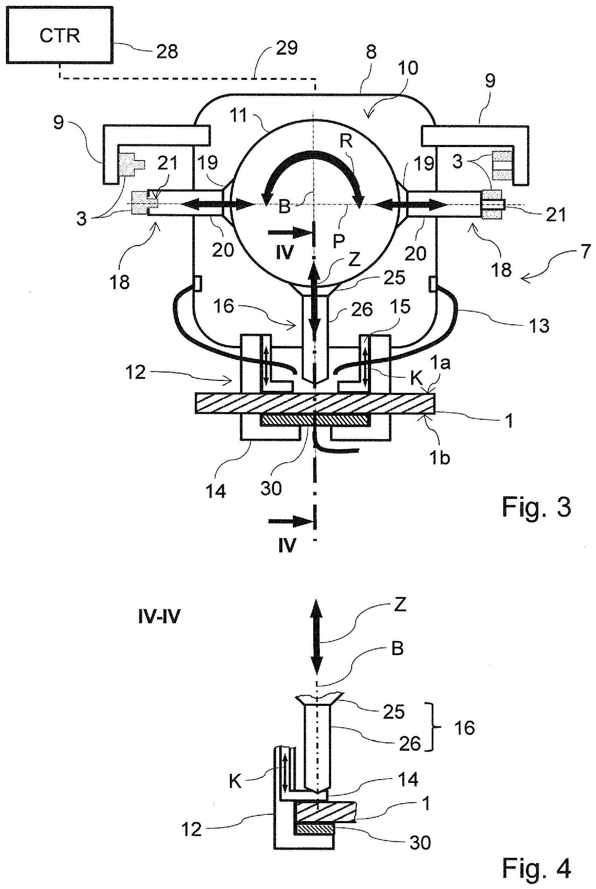

Eine solche Vorrichtung, welche in vorstehend angedeuteter Weise die Funktionalitäten des Fixierens des Werkstücks 1, des Einbringens der Bohrung 2 in das Werkstück 1 und des Positionierens und Einpressens des Einpresselements 3 in die Bohrung 2 in sich vereinigt, wird nachstehend unter Bezugnahme auf die Darstellung in Fign. 3 und 4 als ein weiteres Ausführungsbeispiel der vorliegenden Erfindung beschrieben.

Fig. 3 zeigt eine schematische Darstellung einer Setzvorrichtung 7 zum Setzen eines Einpresselements in ein Werkstück in einer Vorderansicht, und Fig. 4 zeigt die Setzvorrichtung 7 von Fig. 3 in einer geschnittenen Einzelheit, wobei der Schnittverlauf und die Blickrichtung der Schnittansicht von Fig. 4 in Fig. 3 durch eine strichpunktierte Linie mit Pfeilen IV-IV symbolisiert ist.

Gemäß der Darstellung in Fig. 3 weist die Setzvorrichtung 7 einen Grundkörper 8, zwei Zuführeinheiten 9, eine Bearbeitungseinheit 10 mit einer Werkzeugaufnahme 11, eine Fixiereinheit 12 und eine Absaugvorrichtung 13 auf.

Die Fixiereinheit 12 weist ein Stützelement 14 und ein Klemmelement 15 auf. Das Stützelement 14 ist fest an dem Grundkörper 8 angebracht. Das Stützelement 14 ist in dem dargestellten Ausführungsbeispiel ein Winkel (auch als Spannwinkel bezeichnet) ausgebildet, welcher das Werkstück 1 von seiner Rückseite 1b her untergreift. Das Klemmelement 15 ist in dem dargestellten Ausführungsbeispiel als ein Winkel (auch als Spannbacke bezeichnet), ausgeführt, der an dem Stützelement 14 verschiebbar gelagert und durch eine nicht näher dargestellte Antriebsvorrichtung in einer Klemmrichtung K bewegbar ist und im Einsatz das Werkstück 1 von seiner Bearbeitungsseite 1a her mit dem Stützelement 14 verklemmt und somit fixiert. Das Stützelement 14 und das Klemmelement 15 können eine Ausnehmung aufweisen, die wenigstens dem Durchmesser der Bohrung bzw. des Einpresselements 3 oder einem Einpresswerkzeug entsprechen. Alternativ kann auch jeweils ein Paar von Stützelementen 14 und ein Paar von Klemmelementen 15 vorgesehen sein, die beidseits der Bohrung bzw. der Bearbeitungsstelle zugreifen.

Die Bearbeitungseinheit 10 weist eine Bohreinheit 16 und zwei Einpresseinheiten 18 auf, die an der Werkzeugaufnahme 11 der Bearbeitungseinheit 10 montiert sind. Die Werkzeugaufnahme 11 ist in dem dargestellten Ausführungsbeispiel als ein Drehkopf ausgebildet, der in einer Drehrichtung R um ein Drehachse, die bei fixiertem Werkstück 1 parallel zu der Bearbeitungsoberfläche 1a des Werkstücks 1 verläuft, drehbar gegenüber dem Grundkörper 8 gelagert und durch eine nicht näher dargestellte Antriebseinrichtung in Drehrichtung R bewegbar ist. Jede der Einpresseinheiten 18 weist ein Führungsteil 19 auf, welches in der Werkzeugaufnahme 11 fest aufgenommen ist (eingeschraubt, festgeschraubt, oder dergleichen). In dem Führungsteil ist ein Pressteil 20 (auch als Stempel 20 zu bezeichnen) entlang einer Pressachse P verschieblich und durch eine nicht näher dargestellte Antriebseinheit axial bewegbar gelagert. Das Pressteil 20 jeder Einpresseinheit 18 weist an seinem äußeren Ende ein Formteil 21 auf, welches an ein Formmerkmal eines bestimmten Einpresselements 3 angepasst ist. Im Fall eines Einpresselements 3 mit einer Durchgangsbohrung gemäß Fig. 2C ist das Formteil 21, wie beispielsweise auf der rechten Seite von Fig. 3 dargestellt, in Form eines Doms, der an die Durchgangsbohrung 6 (Fig. 2C) des Einpresselements 3 angepasst ist, ausgebildet. Im Falle eines Einpresselements 3, das gemäß Fig. 2B einen Zapfen 5 aufweist, ist das Formteil 21 des Pressteils 20 der Einpresseinheit 18 beispielsweise in Form einer Eintiefung, die an dem Zapfen 5 des Einpresselements 3 angepasst ist, ausgebildet, wie in Fig. 3 auf der linken Seite dargestellt. In dem dargestellten Ausführungsbeispiel sind das Formteil 21 und das Pressteil 20 jeweils einstückig ausgebildet; es ist in einer Abwandlung auch denkbar, auswechselbare Formteile 21 vorzusehen, die an jeweils identisch ausgebildete Pressteile 20 beispielsweise anschraubbar oder sonst anbringbar sind.

Jede der Zuführeinheiten 9 ist ausgebildet, Einpresselemente 3 jeweils einer Art so zuzuführen, dass sie von einer jeweiligen Einpresseinheit 18 mit einem an die Art des Einpresselements 3 angepassten Formteil 21 aufgenommen werden können. Mit anderen Worten, die Zuführeinheit 9 auf der rechten Seite der Darstellung in Fig. 3 ist eingerichtet, Einpresselemente 3 von der in Fig. 2C gezeigten Art (mit einer Durchgangsbohrung 6, siehe dort) zuzuführen und zur Aufnahme durch die Einpresseinheit 18 auf der rechten Seite der Darstellung in Fig. 3, die einen Dorn als Formteil 21 aufweist, bereitzustellen, wenn sich die Einpresseinheit 18 in einer entsprechenden Übergabeposition befindet. Gleichermaßen ist die Zuführeinheit 9 auf der linken Seite der Darstellung in Fig. 3 eingerichtet, Einpresselemente der in Fig. 2B gezeigten Art (mit einem Zapfen 5, siehe dort) zuzuführen und zur Aufnahme durch die Einpresseinheit 18 auf der linken Seite der Darstellung in Fig. 3, die eine Eintiefung als Formteil 21 aufweist, bereitzustellen, wenn sich diese Einpresseinheit in einer entsprechenden Übergabeposition befindet. Die Aufnahme des Einpresselements 3 durch die Einpresseinheit 18 kann jeweils durch eine Zustellbewegung des Pressteils (Stempels) 20 der jeweiligen Einpresseinheit 18, wodurch sich das jeweilige Formmerkmal (Durchgangsbohrung, Zapfen) des Einpresselements 3 dem jeweiligen Formteil 21 (Dorn, Eintiefung) des jeweiligen Pressteils 20 ein- oder anfügt, bewerkstelligt werden. Durch nicht näher dargestellte Mittel wie etwa einen in einer Nut eingesetzten O-Ring oder dergleichen kann gewährleistet werden, dass das Einpresselement 3 beim axialen Zurückfahren des Pressteils 20 der jeweiligen Einpresseinheit 18 auf dem Formteil 21 gehalten bleibt.

Die Bohreinheit 16 der Setzvorrichtung 7 weist gemäß der Darstellung in Fig. 3 in ähnlicher Weise wie die Einpresseinheiten 18 ein Führungsteil 25 auf, das an der Werkzeugaufnahme 11 der Bearbeitungseinheit 10 fest aufgenommen (eingeschraubt, angeschraubt oder dergleichen) ist. In dem Führungsteil 25 ist ein Bohrteil 26 entlang einer Bohrachse B beweglich und durch eine nicht näher dargestellte Antriebseinrichtung axial antreibbar gelagert. Der nicht näher dargestellte Antrieb des Bohrteils 26 kann eine Drehung um die Bohrachse B umfassen, oder das Bohrteil 26 weist selbst einen Drehantrieb zur Drehung eines Bohrers um die Bohrachse B auf.

Der Setzvorrichtung 7 ist ferner eine Recheneinheit (ein Steuergerät) 28 zugeordnet, die über eine Signalleitung 29 mit der Setzvorrichtung 7 bzw. jeweiligen Antriebseinheiten, gegebenenfalls auch mit nicht näher dargestellten Sensorelementen, verbunden ist. Die Recheneinheit 28 führt ein vorab hinterlegtes Programm aus, welches die vorstehend in Bezug auf Fign. 1A und 1B angedeuteten und nachstehend noch genauer beschriebenen Funktionen und Vorgänge der Setzvorrichtung 7 steuert.

In der dargestellten Situation gemäß Fig. 3 und Fig. 4 ist das Werkstück 1 zwischen dem Stützelement 14 und dem Klemmelement 15 der Fixiereinheit 12 eingeklemmt und dadurch in Bezug auf den Grundkörper 8 der Setzvorrichtung 7 ortsfest fixiert. Genauer gesagt, ruht das Werkstück 1 mit seiner Rückseite 1b auf einer Unterlage 30, die ihrerseits auf dem Stützelement 14 der Fixiereinheit 12 ruht, während das Klemmelement (die Spannbacken) 15 der Fixiereinheit 12 direkt auf die Bearbeitungsoberfläche 1a des Werkstücks 1 wirken. Die Klemmwirkung des Klemmelements 15 und des Stützelements 14 in Klemmrichtung K kann durch einen automatisierten oder manuellen Eingabebefehl an der Recheneinheit 28 eingeleitet werden und den Beginn des Bearbeitungsprogramms einleiten.

In der dargestellten Situation gemäß Fig. 3 und Fig. 4 befindet sich die Werkzeugaufnahme 11, die gemäß vorstehender Beschreibung in einer Drehrichtung R bezüglich des Grundkörpers 8 drehbar ist, in einer Drehlage derart, dass sich die Bohreinheit 16 in einer Arbeitsposition befindet, d.h., das Bohrteil 26 der Bohreinheit 16 senkrecht auf die Bearbeitungsoberfläche 1a des Werkstücks 1 weist, wobei die Bohrachse B senkrecht zu der Bearbeitungsoberfläche 1a des Werkstücks 1 steht und die Bearbeitungsoberfläche 1a an einer vorab festgelegten Bearbeitungsstelle trifft. Diese Drehlage kann durch nicht näher dargestellte Mittel wie etwa einen Rastbolzen, der an dem Grundkörper 8 gelagert ist und in eine nicht näher dargestellte Vertiefung der Werkzeugaufnahme 11 eingreift, unverrückbar festgelegt (arretiert) sein. Die Recheneinheit 28 steuert die nicht näher dargestellten Antriebsmittel derart an, dass das Bohrteil 26 oder ein darin gelagerter Bohrer in Drehung versetzt wird und das Bohrteil 26 entlang der Bohrachse B in der mit der Bohrachse B zusammenfallenden Zustellrichtung Z auf das Werkstück zubewegt wird, und steuert diese Bewegungen, gegebenenfalls unter Berücksichtigung geeigneter Sensorsignale, hinsichtlich Drehzahl, Zustellgeschwindigkeit und/oder Vorschubkraft, um eine Bohrung (vgl. Bohrung 2 in Fig. 1A) in das Werkstück 1 gemäß voranstehender Beschreibung zu Fign. 1A bis 2C einzubringen. Nach Fertigstellung der Bohrung wird die Bohreinheit bzw. das Bohrteil 26 durch entsprechende Ansteuerung durch die Recheneinheit 28 zurückgefahren, und wird eine gegebenenfalls vorhandene Arretierung (Rastbolzen), welche die Drehlage der Werkzeugaufnahme 11 festlegt, gelöst.

Durch die an der Setzvorrichtung 7 vorgesehene Absaugvorrichtung 13 werden Bohrreste wie etwa Bohrstäube, Bohrpartikel, Faserstücke, Werkstückbruchstücke oder dergleichen während des Bohrvorgangs von der Bearbeitungsstelle abgesaugt.

Daraufhin wird die Werkzeugaufnahme 11 mittels Ansteuerung durch die Recheneinheit 28 entlang der Drehrichtung R gedreht (da die Bohr- und die Pressachse B, P in dem dargestellten Ausführungsbeispiel senkrecht zueinander stehen, um 90°), sodass diejenige Einpresseinheit 18 mit dem richtigen Einpresselement 3 gemäß Bearbeitungsprogramm in ihre Arbeitsposition gebracht wird, in welcher die Pressachse P senkrecht auf die Bearbeitungsoberfläche 1a des Werkstücks 1 fällt und die vorab festgelegte Bearbeitungsstelle trifft. (Es versteht sich, dass die Bearbeitungsstelle nun nicht mehr sichtbar sein kann, da sich an dieser Stelle nun die Bohrung 2 (Fig. 1A) befindet.) Mit anderen Worten, in der Arbeitsposition der Einpresseinheit 18 befindet sich die Pressachse P in exakt der gleichen Lage, in welcher sich zuvor die Bohrachse B befunden hat. Durch die Befestigung in der Werkzeugaufnahme 11 werden die Bewegungen der Bohreinheit 16 und der Einpresseinheit(en) 18 gebunden geführt, sodass sich ihre Relativlage zueinander nicht ändert. Nach allfälliger Arretierung der Drehlage der Werkzeugaufnahme 11 wird nunmehr die Einpresseinheit 18 so angesteuert, dass das Pressteil (der Stempel) 20 mit dem daran oder darin aufgenommenen Einpresselement 3 in Zustellrichtung Z (vgl. Fig. 1B) zustellt und das Einpresselement 3 in die Bohrung einpresst. Da das Einpresselement 3 durch den zuvor erwähnten O-Ring oder dergleichen elastisch an dem Pressteil 20 aufgenommen ist (und somit auch ein geringfügiges Spiel aufweist), kann sich das Einpresselement 3 an der Bohrung ausrichten und zentrieren. Die Presskraft des Pressteils 20 wirkt jedoch exakt senkrecht und mittig zu der Bearbeitungsoberfläche 1a des Werkstücks 1, sodass das Einpresselement 3 exakt senkrecht in die Bohrung des Werkstücks 1 eingepresst wird. Zu weiteren Einzelheiten des Einpressvorgangs, einschließlich der Einpresstiefe etc., sei auf die vorstehende Beschreibung des Verfahrens im Zusammenhang mit Fign. 1A-2E verwiesen.

Nach Einpressen des Einpresselements 3 um eine durch das Bearbeitungsprogramm vorgegebene Einpresstiefe fährt das Pressteil 20 des entsprechenden Einpresselements 18 zurück, werden die allfällige Arretierung gelöst und die Werkzeugaufnahme 11 wieder in die in Fig. 3 gezeigte Drehlage gedreht. Daraufhin wird die Fixiereinheit 12 gelöst, sodass das Werkstück 1 entnommen werden kann.

Die Erfindung wurde vorstehend anhand bevorzugter Ausführungsbeispiele, - varianten, -alternativen und Abwandlungen beschrieben und in den Figuren veranschaulicht. Diese Beschreibungen und Darstellungen sind rein schematisch und schränken den Schutzumfang der Ansprüche nicht ein, sondern dienen nur deren beispielhafter Veranschaulichung. Es versteht sich, dass die Erfindung auf vielfältige Weise ausgeführt und abgewandelt werden kann, ohne den Schutzumfang der Patentansprüche zu verlassen.

Beispielsweise sind in Fig. 3 zwei Einpresseinheiten 18 und eine Bohreinheit 16 dargestellt. Es versteht sich, dass diese Anzahl ganz beliebig ist und je nach Anzahl von Arten des Einpresselements 3 angepasst werden kann. Hierzu kann auch von der rechtwinkligen Anordnung der Bohrachse B und der Pressachse P jeder Einpresseinheit 18 abgewichen werden und beispielsweise zwei Bohreinheiten 16 (mit Bohrern unterschiedlichen Durchmessers) und vier Einpresseinheiten 18 für vier Arten von Einpresselementen 3 jeweils in einem Winkelabstand von 60° in der Werkzeugaufnahme 11 aufgenommen sein.

Es versteht sich auch, dass die Verwendung der Unterlage 30 optional ist und in geeigneten Anwendungsfällen wegfallen kann.

Obschon in Fig. 3 die Werkzeugaufnahme 11 als Drehkopf dargestellt ist, kann von dieser Ausführung abgewichen werden und kann die Werkzeugaufnahme 11 beispielsweise als ein Schlitten ausgeführt sein, der parallel zu der Bearbeitungsoberfläche 1a des Werkstücks 1 verschiebbar ist. In diesem Fall würden die Bohreinheit 16 und die Einpresseinheiten 18 ebenfalls eine unveränderliche Lagebeziehung zueinander aufweisen, wobei hierbei die Bohrachse B und die Pressachse P, die auch als Arbeitsachsen bezeichnet werden können, parallel zueinander verlaufen würden, und bei linearer Verschiebung des Schlittens (Werkzeugaufnahme 11) eine gebundene Bewegung ausführen. Das Ansteuern der jeweils identischen Arbeitsposition kann wiederum durch eine geeignete Arretierung, beispielsweise formschlüssig, sichergestellt werden.

Eine noch weitere Abwandlung kann derart ausgebildet sein, dass die Werkzeugaufnahme 11 die Bohreinheit 16 und die Einpresseinheiten 18 mit parallelen Arbeitsachsen (Bohrachse B, Pressachse P) aufnimmt und ihrerseits um eine Rotationsachse, die ebenfalls parallel zu den Arbeitsachsen verläuft, drehbar ist. Gemäß vorstehender Beschreibung ist vorgesehen, dass für jede Art von Einpresselement 3 eine Zuführeinheit 9 vorgesehen ist, welche den jeweiligen Einpresseinheiten 18 jeweils nur eine Art von Einpresselement zuführt. Es ist insbesondere in den letzten beiden Abwandlungen, in welchen die Arbeitsachsen parallel zueinander verlaufen und sowohl die Bohreinheit 16 als auch die Einpresseinheiten 18 stets zu dem Werkstück 1 hin weisen, auch denkbar, dass eine einzige Zuführeinheit vorgesehen ist, welche Einpresselemente 3 unterschiedlicher Art in einer Reihenfolge, die durch ein Bearbeitungsprogramm vorgegeben sein kann, direkt zu der Bearbeitungsstelle hin fördert. Dies kann beispielsweise in der Art einer Patronengurtzuführung oder Blisterzuführung oder dergleichen bewerkstelligt werden.

In einer noch weiteren Abwandlung ist es auch denkbar, dass die Werkzeugaufnahme 11 eine Verschiebeeinheit aufweist, in welcher eine Vielzahl von Werkzeugmodulen, die jeweils ein einziges Werkzeug wie etwa eine Bohreinheit oder eine Einpresseinheit aufnehmen, verschiebbar und antreibbar gelagert sind, wobei die jeweils identische Arbeitsposition wieder durch geeignete Mittel arretierbar ist.

In einer Erweiterung des grundlegenden, in Fig. 3 gezeigten Ausführungsbeispiels ist es auch denkbar, dass die als Drehkopf ausgebildete Werkzeugaufnahme 11 zwei oder mehr Ebenen von sternförmig aufgenommenen Einzelwerkzeugen (Bohreinheiten, Einpresseinheiten) aufweist und die Werkzeugaufnahme 11 um einen Weg, der exakt dem Abstand der Werkzeugebenen entspricht, linear entlang einer die Drehrichtung R vorgebenden Drehachse verschiebbar ist.

In einer weiteren Abwandlung des grundlegenden Ausführungsbeispiels von Fig. 3 kann es auch vorgesehen sein, dass die Werkzeugaufnahme 11 bzw. die Bearbeitungseinheit 10, die die Werkzeugaufnahme 11 drehbar gelagert aufnimmt, in Zustellrichtung Z gegenüber dem Grundkörper 8 verschiebbar gelagert und antreibbar ist. In diesem Fall wären die Bohreinheit 16 und die Einpresseinheiten 18 jeweils starr bzw. könnten starr in der Werkzeugaufnahme 11 aufgenommen sein. Es sind aber auch beide Bewegungsarten kombinierbar, indem beispielsweise sowohl die gesamte Bearbeitungseinheit 10 in Zustellrichtung Z verschiebbar ist, aber ein letzter Arbeitshub durch die Bohreinheit 16 bzw. die Einpresseinheiten 18 selbst durchgeführt wird.

In dem vorstehend beschriebenen Ausführungsbeispiel weist die Fixiereinheit 12 ein Stützelement 14 und ein Klemmelement 15 auf. Diese Anordnung ist insbesondere bei Anwendungen in der Nähe eines Randes des Werkstücks 1 vorteilhaft. Sind Einpresselemente 3 weiter vom Rand des Werkstücks 1 entfernt zu setzen, kann dem durch eine Verlängerung der Reichweite von Stützelement 14 und Klemmelement 15 Rechnung getragen werden. Ab einer bestimmten Entfernung vom Rand des Werkstücks 1 kann es vorteilhaft sein, auf andere Arten der Fixierung des Werkstücks zurückzugreifen, die ein Untergreifen des Werkstücks vermeiden. Eine Ausführungsvariante kann beispielsweise Saugelemente aufweisen, welche das Werkstück 1 ansaugen, oder (ggf. bewegliche) Greifelemente, die in dafür vorgesehene Aussparungen am Werkstück eingreifen und das Werkstück auf diese Weise fixieren. Obschon nicht näher dargestellt, kann eine Überwachungsfunktion über Qualitätssicherungssysteme vorgesehen sein.

### Bezugszeichenliste

- 1: Werkstück
- 1a: Bearbeitungsoberfläche (Bearbeitungsseite)
- 1b: Rückseite (rückwärtige Oberfläche)
- 2: Bohrung
- 2a: Innenwand (Innenoberfläche)
- 3: Einpresselement
- 4: Hauptkörper
- 5: Zapfen
- 6: Bohrung
- 7: Setzvorrichtung
- 8: Grundkörper (Flanschplatte)
- 9: Zuführeinheit
- 10: Bearbeitungseinheit
- 11: Werkzeugaufnahme (Drehkopf)
- 12: Fixiereinheit
- 13: Absaugvorrichtung
- 14: Stützelement (Spannwinkel)
- 15: Klemmelement (Spannbacke)
- 16: Bohreinheit
- 18: Einpresseinheit
- 19: Führungsteil
- 20: Pressteil (Stempel)
- 21: Formteil (Dorn/Eintiefung/Ring)
- 25: Führungsteil
- 26: Bohrteil
- 28: Recheneinheit (Steuergerät)
- 29: Signalleitung
- 30: Unterlage
- 41: Rasthaken
- 42: Kranz
- 43: Einschnitt
- 44: Bohrung
- 45: Fase
- 50: Teller
- 50a: Anschlagfläche

- dⱼ: Durchmesser (eines Werkstücks bzw. einer Bohrung j)
- tⱼ: Stärke bzw. Dicke (eines Werkstücks j)

- B: Arbeitsachse (Bohrachse)
- K: Klemmrichtung
- P: Arbeitsachse (Pressachse)
- R: Rotationsrichtung
- Z: Zustellrichtung

Die vorstehende Liste der Bezugszeichen und Abkürzungen ist integraler Bestandteil der Beschreibung.

## Patentansprüche

1. Vorrichtung (7) zum Setzen eines Einpresselements (3) in ein Werkstück (1), insbesondere aus Kunststoff oder Faserverbundwerkstoff wie etwa CFK, insbesondere im Fahrzeugbau, an einer vorgegebenen Stelle, wobei die Vorrichtung (7) aufweist:
- einen Grundkörper (8);
- eine an dem Grundkörper (8) angebrachte Fixiereinheit (12), die zum Fixieren des Werkstücks (1) ausgebildet ist; und
- eine Bearbeitungseinheit (10), die an dem Grundkörper (8) angebracht ist und aufweist:
- eine Bohreinheit (16), die zum Einbringen einer Bohrung (2) in dem durch die Fixiereinheit (12) fixierten Werkstück (1) ausgebildet ist; und
- eine Einpresseinheit (18), die zum Einpressen eines Einpresselements (3) in die Bohrung (2) ausgebildet ist, **dadurch gekennzeichnet, dass** die Einpresseinheit (18) ausgebildet ist, um das Einpresselement (3) derart elastisch aufzunehmen, dass das Einpresselement (3) gegen eine Wirkung von Trägheitskräften und der Schwerkraft an der Einpresseinheit (18) gehalten wird.

2. Vorrichtung (7) nach Anspruch 1, **dadurch gekennzeichnet, dass** die Bearbeitungseinheit (10) ausgebildet ist, um wahlweise die Bohreinheit (16) oder die Einpresseinheit (18) in eine vorbestimmte Arbeitsposition entsprechend der vorbestimmten Stelle zu bringen, wobei eine Arbeitsachse (B) der Bohreinheit (16), wenn sich die Bohreinheit (16) in der Arbeitsposition befindet, und eine Arbeitsachse (P) der Einpresseinheit (18), wenn sich die Einpresseinheit (18) in der Arbeitsposition befindet, wenigstens im Wesentlichen übereinstimmen.

3. Vorrichtung (7) nach Anspruch 1 oder 2, **dadurch gekennzeichnet, dass** die Bearbeitungseinheit (11) ausgebildet ist, um die Bohreinheit (16) und die Einpresseinheit (18) in einer gebundenen Bewegung zu führen.

4. Vorrichtung (7) nach einem der vorstehenden Ansprüche, **dadurch gekennzeichnet, dass** die Bearbeitungseinheit (10) eine Werkzeugaufnahme (11) zur Aufnahme der Bohreinheit (16) und der Einpresseinheit (18) aufweist, wobei die Werkzeugaufnahme (11) gegenüber dem Grundkörper (8) beweglich gelagert und antreibbar ist, wobei die Bohreinheit (16) und die Einpresseinheit (18) an der Werkzeugaufnahme (11) befestigt sind, und wobei die Arbeitsposition einer vorgegebenen, vorzugsweise fixierbaren, Rastlage oder Endlage der Werkzeugaufnahme (11) entspricht.

5. Vorrichtung (7) nach Anspruch 4, **dadurch gekennzeichnet, dass** die Werkzeugaufnahme (11) um eine Drehachse (R) beweglich und antreibbar gegenüber dem Grundkörper (8) gelagert ist.

6. Vorrichtung (7) nach Anspruch 5, **dadurch gekennzeichnet, dass** die Drehachse (R) der Werkzeugaufnahme (11) parallel oder senkrecht zu einer Bearbeitungsoberfläche (1a) des Werkstücks (1) ist.

7. Vorrichtung (7) nach Anspruch 4, **dadurch gekennzeichnet, dass** die Werkzeugaufnahme (11) gegenüber dem Grundkörper (8) linear verschiebbar und antreibbar gelagert ist.

8. Vorrichtung (7) nach einem der vorstehenden Ansprüche, **dadurch gekennzeichnet, dass** die Bohreinheit (16) und die Einpresseinheit (18) wenigstens in Teilen in Richtung ihrer jeweiligen Arbeitsachsen (B, P) gegenüber der Bearbeitungseinheit (10) beweglich und antreibbar sind.

9. Vorrichtung (7) nach einem der vorstehenden Ansprüche, **dadurch gekennzeichnet, dass** eine Zuführeinheit (9) vorgesehen ist, die zum automatischen Zuführen von Einpresselementen (3) ausgebildet ist, wobei die Zuführeinheit (9) vorzugsweise an dem Grundkörper (8) angebracht ist.

10. Vorrichtung (7) nach einem der vorstehenden Ansprüche, **dadurch gekennzeichnet, dass** mehrere Einpresseinheiten (18) für unterschiedliche Arten von Einpresselementen (3) an der Bearbeitungseinheit (10) vorgesehen sind, wobei vorzugsweise für jede Art von Einpresselementen (3) eine gesonderte Zuführeinheit (9) vorgesehen ist.

11. Vorrichtung (7) nach einem der vorstehenden Ansprüche, **dadurch gekennzeichnet, dass** eine Absaugvorrichtung (13), die zum Absaugen von Bohrresten ausgebildet ist, vorgesehen ist, wobei die Absaugvorrichtung (13) vorzugsweise an dem Grundkörper (8) und/oder der Fixiereinheit (12) befestigt oder in die Vorrichtung (7) integriert ist.

12. Vorrichtung (7) nach einem der vorstehenden Ansprüche, **dadurch gekennzeichnet, dass** die Fixiereinheit (12) ein Stützelement (14), welches das Werkstück (1) von einer Rückseite her stützt, und ein Klemmelement (15), welches das Werkstück (1) von einer Bearbeitungsseite her mit dem Stützelement (14) verklemmt, aufweist.

13. Vorrichtung (7) nach einem der vorstehenden Ansprüche, **dadurch gekennzeichnet, dass** die Einpresseinheit (18) ein Formteil (21) aufweist, welches an einen Formabschnitt (4, 5, 6) des Einpresselements (3) angepasst ist, um das Einpresselement (3) aufzunehmen.

14. Vorrichtung (7) nach einem der Ansprüche 7 bis 13, **dadurch gekennzeichnet, dass** die Einpresseinheit (18) ausgebildet ist, um das Einpresselement (3) von der Zuführeinheit (9) aufzunehmen, während sich die Bohreinheit (16) in ihrer Arbeitsposition befindet.

15. Vorrichtung (7) nach einem der vorstehenden Ansprüche, **dadurch gekennzeichnet, dass** eine Recheneinheit (28) vorgesehen ist, welche mit der Vorrichtung (7) verbunden oder in diese integriert ist und welche ausgelegt und eingerichtet ist, die Bohreinheit (16) so anzusteuern, dass bei Einbringen der Bohrung (2) in das Werkstück (1) wenigstens ein Parameter aus der Gruppe, die eine Zustellgeschwindigkeit, eine Drehzahl und eine Vorschubkraft der Bohreinheit (16) enthält, an ein vorgegebenes Bohrschema angepasst ist.

16. Verfahren zum Setzen von Einpresselementen (3) in ein Werkstück (1), insbesondere aus Kunststoff oder Faserverbundwerkstoff, wie etwa CFK, wobei das Verfahren folgende Verfahrensschritte aufweist:
a) Fixieren des Werkstücks (1),
b) Einbringen einer Bohrung (2) in das Werkstück (1), vorzugsweise unter Absaugen von Bohrresten im Bereich der Bohrung (2),
c) elastisches Aufnehmen eines Einpresselements (3) durch die Einpresseinheit (18),
d) Positionieren des Einpresselements (3) mittels der Einpresseinheit (18) über der Bohrung (2), und
e) Einpressen des Einpresselements (3) mittels der Einpresseinheit (18) in die Bohrung (2),
wobei zur Durchführung des Verfahrens eine Vorrichtung nach einem der vorstehenden Ansprüche verwendet wird.

17. Verfahren nach Anspruch 16, **weiter gekennzeichnet durch** eine vor Durchführung der Verfahrensschritte a) bis e) durchgeführte Vorbehandlung, insbesondere Aufrauhung, der Bearbeitungsoberfläche (1a) wenigstens im Bereich der vorbestimmten Stelle.

## Claims

1. A device (7) for setting a press-in element (3) into a workpiece (1), especially made of plastics material or fibre composite material such as CFRP, especially in vehicle manufacturing, at a specified point, wherein the device (7) has:
- a basic body (8);
- a fixing unit (12) attached to the basic body (8), which unit is designed for fixing the workpiece (1); and
- a machining unit (10), which is attached to the basic body (8) and has:
- a drilling unit (16) which is designed to form a bore (2) in the workpiece (1) which is fixed by the fixing unit (12); and
- a pressing-in unit (18), which is designed for pressing a press-in element (3) into the bore (2), **characterised in that** the pressing-in unit (18) is designed in order to receive the press-in element (3) elastically such that the press-in element (3) is held on the pressing-in unit (18) counter to an action of inertial forces and the force of gravity.

2. A device (7) according to Claim 1, **characterised in that** the machining unit (10) is designed in order to bring either the drilling unit (16) or the pressing-in unit (18) into a predetermined working position corresponding to the predetermined point, with a working axis (B) of the drilling unit (16), if the drilling unit (16) is in the working position, and a working axis (P) of the pressing-in unit (18), if the pressing-in unit (18) is in the working position, at least substantially coinciding.

3. A device (7) according to Claim 1 or Claim 2, **characterised in that** the machining unit (11) is designed to guide the drilling unit (16) and the pressing-in unit (18) in a combined movement.

4. A device (7) according to one of the preceding claims, **characterised in that** the machining unit (10) has a tool mount (11) for receiving the drilling unit (16) and the pressing-in unit (18), the tool mount (11) being movably mounted and drivable relative to the basic body (8), the drilling unit (16) and the pressing-in unit (18) being fastened to the tool mount (11), and the working position corresponding to a specified, preferably fixable, latching position or end position of the tool mount (11).

5. A device (7) according to Claim 4, **characterised in that** the tool mount (11) is mounted movably and drivably about an axis of rotation (R) relative to the basic body (8).

6. A device (7) according to Claim 5, **characterised in that** the axis of rotation (R) of the tool mount (11) is parallel or perpendicular to a machining surface (1a) of the workpiece (1).

7. A device (7) according to Claim 4, **characterised in that** the tool mount (11) is mounted linearly displaceably and drivably relative to the basic body (8).

8. A device (7) according to one of the preceding claims, **characterised in that** the drilling unit (16) and the pressing-in unit (18), at least in parts, are movable and drivable relative to the machining unit (10) in the direction of their respective working axes (B, P).

9. A device (7) according to one of the preceding claims, **characterised in that** a feed unit (9) is provided which is designed for automatically feeding press-in elements (3), the feed unit (9) preferably being attached to the basic body (8).

10. A device (7) according to one of the preceding claims, **characterised in that** a plurality of pressing-in units (18) for different types of press-in elements (3) is provided on the machining unit (10), with preferably a separate feed unit (9) being provided for each type of press-in elements (3).

11. A device (7) according to one of the preceding claims, **characterised in that** a suction device (13) which is designed for extracting drilling residues is provided, the suction device (13) preferably being fastened to the basic body (8) and/or the fixing unit (12), or integrated in the device (7).

12. A device (7) according to one of the preceding claims, **characterised in that** the fixing unit (12) has a support element (14) which supports the workpiece (1) from a rear side, and a clamping element (15) which clamps the workpiece (1) to the support element (14) from a machining side.

13. A device (7) according to one of the preceding claims, **characterised in that** the pressing-in unit (18) has a shaped part (21) which is adapted to a shaped portion (4, 5, 6) of the press-in element (3) in order to receive the press-in element (3).

14. A device (7) according to one of Claims 7 to 13, **characterised in that** the pressing-in unit (18) is designed to receive the press-in element (3) from the feed unit (9) while the drilling unit (16) is in its working position.

15. A device (7) according to one of the preceding claims, **characterised in that** a computing unit (28) is provided which is connected to the device (7) or is integrated therein and which is designed and set up to control the drilling unit (16) such that upon forming the bore (2) in the workpiece (1) at least one parameter from the group comprising an infeed speed, a speed of rotation and a force of advance of the drilling unit (16) is adapted to a specified drilling pattern.

16. A method for setting press-in elements (3) into a workpiece (1), especially made of plastics material or fibre composite material, such as CFRP, wherein the method has the following method steps:
a) fixing the workpiece (1),
b) forming a bore (2) in the workpiece (1), preferably while extracting drilling residues in the region of the bore (2),
c) elastically receiving a press-in element (3) by the pressing-in unit (18),
d) positioning the press-in element (3) over the bore (2) by means of the pressing-in unit (18), and
e) pressing the press-in element (3) into the bore (2) by means of the pressing-in unit (18),
wherein a device according to one of the preceding claims is used for carrying out the method.

17. A method according to Claim 16, **further characterised by** a pretreatment, especially roughening, of the machining surface (1a) at least in the region of the predetermined point, carried out prior to carrying out method steps a) to e).

## Revendications

1. Dispositif (7) permettant la mise en place d'un élément d'insertion (3) dans une pièce (1), en particulier en matériau synthétique ou en matériau composite renforcé par des fibres, tel que du CFK (chloro-fluoro-carbone), en particulier dans une carrosserie de véhicule, dans un emplacement prédéfini, ce dispositif (7) comprenant :
- un corps de base (8),
- une unité de fixation (12) installée sur le corps de base (8) et réalisée pour permettre de fixer la pièce (1), et
- une unité d'usinage (10) qui est installée sur le corps de base (8) et comprend :
- une unité de perçage (16) réalisée pour permettre d'introduire un perçage (2) dans la pièce (1) fixée par l'unité de fixation (12),
- une unité d'insertion (18) qui est réalisée pour permettre d'insérer un élément d'insertion (3) dans le perçage (2),
**caractérisé en ce que**
l'unité d'insertion (18) est réalisée pour permettre de recevoir élastiquement l'élément d'insertion (3) de sorte que cet élément d'insertion puisse être maintenu sur l'unité d'insertion (18) contre l'action de forces d'inertie et de la force de gravité.

2. Dispositif (7) conforme à la revendication 1,
**caractérisé en ce que**
l'unité d'usinage (10) est réalisée pour transférer sélectivement l'unité et de perçage (16) ou l'unité d'insertion (18) dans une position de travail prédéfinie conformément à l'emplacement prédéfinie, l'axe de travail (B) de l'unité de perçage (16) lorsque cette unité (16) est en position de travail et l'axe de travail (P) de l'unité d'insertion (18) lorsque cette unité (18) est en position de travail coïncidant au moins essentiellement.

3. Dispositif (7) conforme à la revendication 1 ou 2,
**caractérisé en ce que**
l'unité d'usinage (10) est réalisée pour permettre de déplacer en liaison l'unité de perçage (16) et l'unité d'insertion (18).

4. Dispositif (7) conforme à l'une des revendications précédentes,
**caractérisé en ce que**
l'unité d'usinage (10) comporte un logement d'outil (11) permettant de recevoir l'unité de perçage (16) et l'unité d'insertion (18), le logement d'outil (11) étant mobile et susceptible d'être entraîné par rapport au corps de base (8), l'unité de perçage (16) et l'unité d'insertion (18) étant fixées dans le logement d'outil (11) et la position de travail correspondant à une position d'encliquetage ou à une position d'extrémité du logement d'outil (11) prédéfinie pouvant de préférence être fixée.

5. Dispositif (7) conforme à la revendication 4,
**caractérisé en ce que**
le logement d'outil (11) est mobile et susceptible d'être entraîné par rapport au corps de base (8) autour d'un axe de rotation (R).

6. Dispositif (7) conforme à la revendication 5,
**caractérisé en ce que**
l'axe de rotation (R) du logement d'outil (11) est parallèle ou perpendiculaire à une surface d'usinage (1a) de la pièce (1).

7. Dispositif (7) conforme à la revendication 4,
**caractérisé en ce que**
le logement d'outil (11) est coulissant linéairement et est susceptible d'être actionné par rapport au corps de base (8).

8. Dispositif (7) conforme à l'une des revendications précédentes,
**caractérisé en ce que**
l'unité de perçage (16) et l'unité d'insertion (18) sont au moins en partie mobiles et susceptible d'être entraînées en direction de leurs axes de travail respectifs (B, P) par rapport à l'unité d'usinage (10).

9. Dispositif (7) conforme à l'une quelconque des revendications précédentes,
**caractérisé en ce qu'**
il est prévu une unité d'alimentation (9) qui est réalisée pour permettre de fournir automatiquement des éléments d'insertion (3), l'unité d'alimentation (9) étant de préférence installée sur le corps de base (8).

10. Dispositif (7) conforme à l'une des revendications précédentes,
**caractérisé en ce qu'**
il est prévu plusieurs unités d'insertion (18) pour des types différents d'éléments d'insertion (3), sur l'unité d'usinage (10), et de préférence, pour chaque type d'élément d'insertion (3) il est prévu une unité d'insertion (9) particulière.

11. Dispositif (7) conforme à l'une des revendications précédentes,
**caractérisé en ce qu'**
il est prévu un dispositif d'aspiration (13) réalisé pour permettre d'aspirer des résidus de perçage, le dispositif d'aspiration (13) étant de préférence fixé sur le corps de base (8) et/ou sur l'unité de fixation (12) ou étant intégré dans le dispositif (7).

12. Dispositif (7) conforme à l'une des revendications précédentes,
**caractérisé en ce que**
l'élément de fixation (12) comporte un élément d'appui (14) qui supporte la pièce (1) sur sa face arrière et un élément de serrage (15) qui bloque la pièce (1) avec l'élément d'appui (14) sur une face d'usinage.

13. Dispositif (7) conforme à l'une des revendications précédentes,
**caractérisé en ce que**
l'unité d'insertion (18) comporte une partie moulée (21) qui est adaptée à un segment moulé (4, 5, 6) de l'élément d'insertion (3) pour permettre de recevoir cet élément d'insertion (3).

14. Dispositif (7) conforme à l'une des revendications 7 à 13,
**caractérisé en ce que**
l'unité d'insertion (18) est réalisée pour permettre de prélever élément d'insertion (3) de l'unité d'alimentation (9) pendant que l'unité de perçage (16) est dans sa position de travail.

15. Dispositif (7) conforme à l'une des revendications précédentes,
**caractérisé en ce qu'**
il est prévu une unité de calcul (28) qui est reliée au dispositif (7) ou intégrée dans celui-ci et qui est conçue et réalisée pour commander l'unité de perçage (16) de sorte que, lors de l'introduction du perçage (2) dans la pièce (1) au moins un paramètre du groupe contenant la vitesse de réglage, la vitesse de rotation et la force d'avancement de l'unité de perçage (16) soit adapté à un schéma de perçage prédéfini.

16. Procédé permettant la mise en place d'éléments d'insertion (3) dans une pièce (1) en particulier en matériau synthétique ou en un matériau composite renforcé par des fibres tel qu'en particulier un CFK, ce procédé comprenant des étapes consistant à :
a) fixer la pièce (1),
b) introduire un perçage (2) dans la pièce (1), de préférence en aspirant des résidus de perçage dans la zone du perçage (2),
c) prélever élastiquement un élément d'insertion (3) par l'unité d'insertion (18),
d) positionner l'élément d'insertion (3) au-dessus du perçage (2) au moyen de l'unité d'insertion (18),
e) insérer l'élément d'insertion (3) dans le perçage (2) au moyen de l'unité d'insertion (18),
procédé lors de la mise en oeuvre duquel on utilise un dispositif conforme à l'une des revendications précédentes.

17. Procédé conforme à la revendication 16,
**caractérisé en outre par** :
un prétraitement mis en oeuvre, avant la mise oeuvre des étapes a) à e), consistant en particulier à rendre rude la surface de travail (1a) au moins dans la zone de l'emplacement prédéfini.
